# EUROPEAN PATENT APPLICATION

(11) **EP 2 919 184 A1**
(43) Date of publication of application: **16.09.2015**
(21) Application number: 15153706.5
(22) Date of filing: 03.02.2015
(51) Int. Cl.: G06Q 50/30, B61L 27/00

(54) **Timetable data suggestion device and timetable data suggestion method**

(30) Priority: 13.03.2014 JP 2014049595
(71) Applicant: Hitachi, Ltd., Tokyo 100-8280 (JP)
(72) Inventor: Hori, Satoru, Tokyo, 100-8280 (JP); Shimura, Akitoshi, Tokyo, 100-8280 (JP)
(74) Representative: MERH-IP Matias Erny Reichl Hoffmann

(57) **Abstract**

To add new position definition points effective for working out a timetable that can sufficiently utilize routes when the number of positions that can be defined in a timetable is less with respect to the shape of a railroad. A timetable data suggestion device includes a storage unit that stores position definition point information (111) including position information of position definition points that are points on a train route and signal route information (112) that defines a train route that is a protection area of a signal, a position definition point work out unit that extracts optional two points, extracts a train route that connects the extracted points based on the signal route information, and works out suggested information with the points on the extracted route being made positions of new position definition points, and a display unit that displays the suggested information on a screen.

## Description

### BACKGROUND OF THE INVENTION

### 1. Field of the Invention

The present invention relates to a timetable data suggestion device and a timetable data suggestion method for suggesting position definition points used in timetable data to users.

### 2. Description of the Related Art

In a traffic management system executing automatic control using a timetable, when the timetable is disrupted, the disruption is recovered by changing the timetable by re-planning.

In JP-A-2011-111058, it is disclosed that the re-planning history data in which respective train delay data in the past and respective re-planning plans executed respectively for each of the train delay data are corresponded to each other are stored, estimated train delay information of the entire timetable is worked out based on information on actual train delay occurred, the re-planning history data are retrieved based on the information on actual train delay and the estimated train delay information, and a re-planning plan corresponding to the train delay data retrieved is suggested.

According to the district, the timetable of the train is regarded as an indication only, the number of the locations of the position that can be defined in the timetable is less with respect to the railroad shape, and there is a case a route capable of traveling in the aspect of facilities cannot be expressed in the timetable. Also, there is a case an RA (route availability) value is set with respect to a route, and whether a train can travel or not is determined by comparing the RA value of the route and the RA value of the train.

Therefore, there is a case a route that can be expressed in a shape satisfying the restriction of the RA value when the route can be expressed finely cannot be expressed in the current timetable. Thus, it is possible that a timetable fully utilizing the route cannot be worked out.

Also, by introduction of the traffic management system, in executing automatic control using a timetable, there is a case a route that cannot be used exists. In re-planning and so on for recovering the timetable disruption, because many existing routes cannot be expressed in the current timetable as described above, it is possible that a disruption cannot be recovered even in a case the disruption would be recovered when the route could be fully utilized.

The method described above can assist to achieve a proper re-planning work by using delay of the train in the past and so on.

However, in the technology described in JP-A-2011-111058, there is no description on change of the position definition points in the timetable.

### SUMMARY OF THE INVENTION

In order to solve the problem described above and to achieve the object, the timetable data suggesting device of an aspect of the present invention includes a storage unit that stores position definition point information including position information of position definition points that are points on a train route and signal route information that defines a train route that is a protection area of a signal, a position definition point work out unit that extracts optional two points, extracts a train route that connects the extracted points based on the signal route information, and/or works out suggested information with the points on the extracted route being made positions of new position definition points, and/or a display unit that displays the suggested information on a screen.

According to the present invention, because the timetable utilizing many routes can be worked out, an efficient plan can be worked out.

Other objects, features and advantages of the invention will become apparent from the following description of the embodiments of the invention taken in conjunction with the accompanying drawings.

### BRIEF DESCRIPTION OF THE DRAWINGS

FIG. 1 shows a configuration of a system in an embodiment of the present invention.
FIG. 2 is a rough program flow of the timetable data suggesting device when the timetable data suggesting device calculates the delay based on the timetable and suggests the position definition points to users in an embodiment of the present invention.
FIG. 3 is a drawing showing a line shape used in Example 1.
FIG. 4 shows delay information held by the timetable data suggestion device in an embodiment of the present invention.
FIG. 5 shows position definition point information held by the timetable data suggestion device in an embodiment of the present invention.
FIG. 6 shows signal route information held by the timetable data suggestion device in an embodiment of the present invention.
FIG. 7 shows link information held by the timetable data suggestion device in an embodiment of the present invention.
FIG. 8 shows a rough program flow of the route extraction function in an embodiment of the present invention.
FIG. 9 is a drawing showing a line shape used in Example 2.
FIG. 10 shows position definition point information held by the timetable data suggestion device in an embodiment of the present invention.
FIG. 11 shows signal route information held by the timetable data suggestion device in an embodiment of the present invention.
FIG. 12 shows link information held by the timetable data suggestion device in an embodiment of the present invention.

### DESCRIPTION OF THE EMBODIMENTS

### EXAMPLE 1

In the first example of the present invention, actions of the timetable data suggesting device when new position definition points are suggested based on the travel plan of the train and the actual travel of the train will be described.

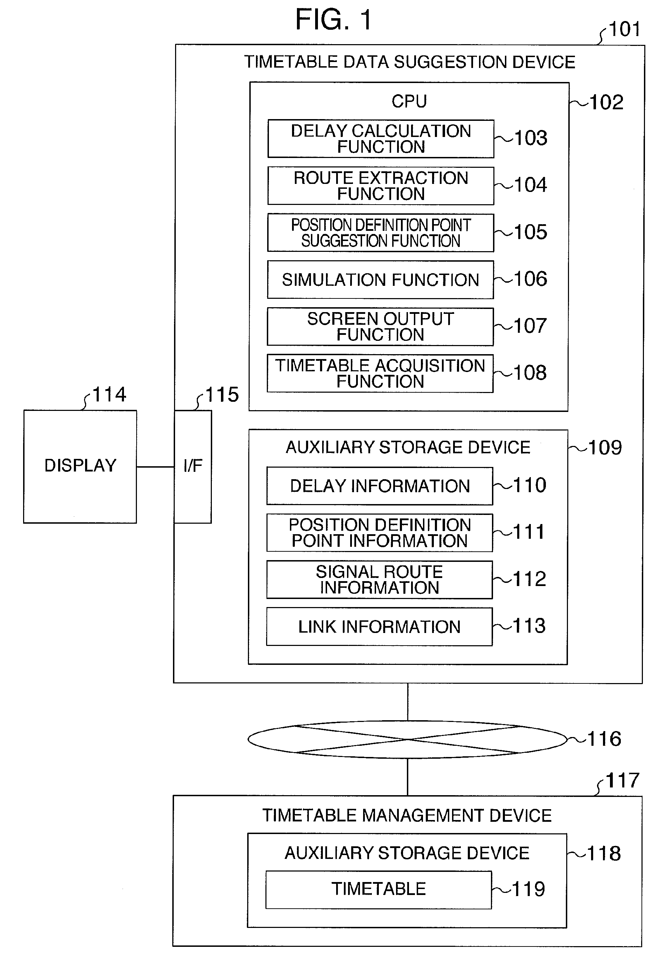

FIG. 1 is a system configuration diagram.

This drawing shows a configuration of a system in an embodiment of the present invention.

A timetable data suggestion device 101 is a device suggesting the position definition points in the timetable, includes a CPU 102, an auxiliary storage device 109, and I/F 115, and is connected to a network 116. The CPU 102 is a central processing unit, and is a device that can execute the programs stored in the auxiliary storage device 109 and a main storage device or transmitted to the main storage device from the auxiliary storage device 109 beforehand. The CPU 102 has a delay calculation function 103, a route extraction function 104, a position definition point suggestion function 105, a simulation function 106, a screen output function 107, and a timetable acquisition function 108.

The delay calculation function 103 is a function of calculating the delay time at each position definition point based on a timetable 119 acquired from a timetable management device 117 by the timetable acquisition function 108.

The route extraction function 104 is a function of extracting a route that connects a combination of the position definition points adjacent to each other having the largest difference in delay based on the delay calculated by the delay calculation function 103.

The position definition point suggestion function 105 is a function of suggesting addition of the position definition points onto the route extracted by the route extraction function 104.

The simulation function 106 is a function of simulating travel of a train from the actual travel of the train and the timetable.

The screen output function 107 is a function of outputting a screen on a display 114. The timetable acquisition function 108 is a function of acquiring the timetable 119 from the timetable management device 117.

The auxiliary storage device 109 is a device for storing information persistently, and stores delay information 110, position definition point information 111, signal route information 112, and link information 113. The delay information 110 is information expressing the delay at each position definition point calculated by the delay calculation function 103 based on information of the timetable 119 stored in the timetable management device 117. The position definition point information 111 is information expressing the links where the position definition points exist and the position definition points adjoining each other in the timetable 119. Here, the link is a unit obtained by dividing the railroad by the boundary or the branch position of the track circuit.

The signal route information 112 is information arraying the collection of the links included in the protection area of signals in the order of travel of the train. The link information 113 is information expressing links of the connection destination of links, whether the link is a crossover or not, and a track circuit corresponding to the link. The display 114 is a device for displaying images for users, and is connected to the I/F 115. The I/F 115 is for converting the electric signal of the timetable data suggesting device 101 and the electric signal of the display 114, and is connected to the display 114. The network 116 is a device for exchanging messages and packets between devices using radio wave, light, sound, electric signal and the like, includes routers, cables and the like, and is connected to the timetable data suggesting device 101 and the timetable management device 117. The timetable management device 117 is a device managing the planned timetable used and the actual timetable that is the result of train travel by the traffic management system, includes an auxiliary storage device 118, and is connected to the network 116. The auxiliary storage device 118 holds the timetable 119.

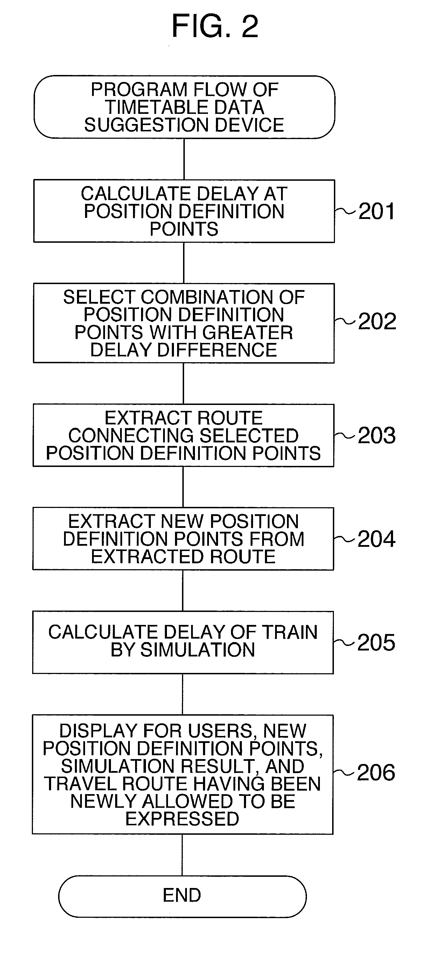

FIG. 2 is a drawing showing a program flow of the timetable data suggesting device 101. This is a rough program flow of the timetable data suggesting device when the timetable data suggesting device 101 calculates the delay based on the timetable and suggests the position definition points to users in an embodiment of the present invention. The processing entity of the processing steps described below is the timetable data suggesting device.

A receiving unit of the timetable data suggesting device 101 acquires the planned timetable and the actual timetable from the traffic management system. The delay calculation function 103 of the timetable data suggesting device 101 deducts the time instant in the planned timetable from the time instant in the actual timetable, and calculates the delay at the position definition point (S201).

The delay calculation function 103 of the timetable data suggesting device 101 selects a combination of such position definition points that the difference of the delay at the position definition points adjoining to each other is greater than a constant value (S202). Here, a combination of the position definition points in which the difference of the delay of a certain train is 10 minutes or more is to be selected.

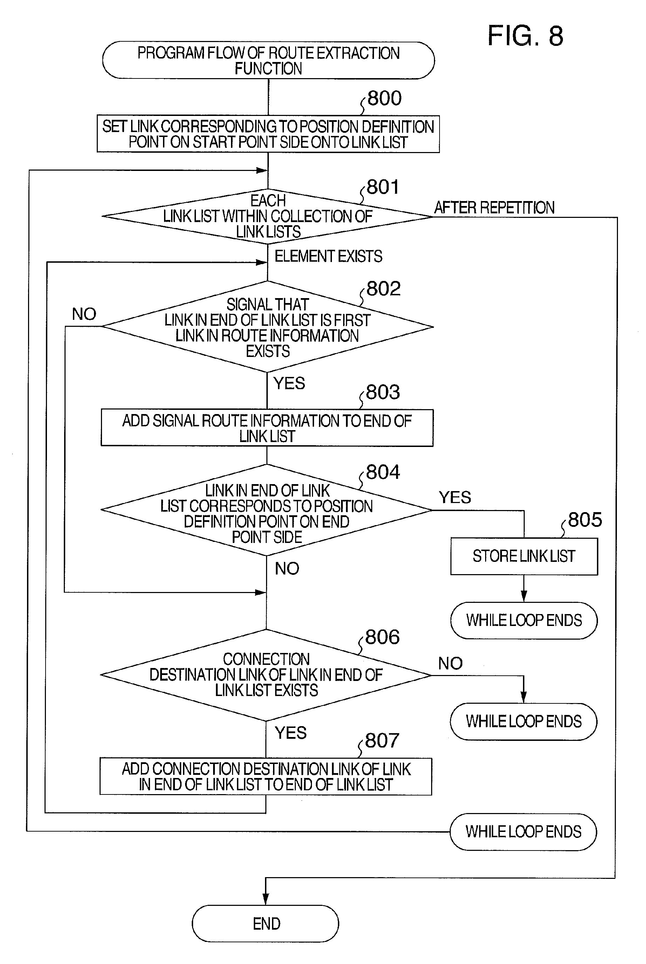

The route selection function 104 of the timetable data suggesting device 101 extracts a route connecting the selected position definition points to each other using the signal route information and the link information (S203). The detail is described in FIG. 8.

The position definition point suggestion function 105 of the timetable data suggesting device 101 extracts links in approach of a signal not existing in the route that could be expressed so far in the timetable as new position definition points (S204).

The simulation function 106 of the timetable data suggesting device 101 calculates the delay of a train of a case the extracted position definition point exists by a simulation (S205). Also, the simulation uses a known technology, and the method thereof is not limited.

The screen output function 107 of the timetable data suggesting device 101 displays, for users, new position definition points, the delay of a train obtained by the simulation, and the travel route having been newly allowed to be expressed (S206).

Here, in the timetable data suggesting device 101, even when the delay calculation function 103 does not extract a combination of the position definition points, it is also possible that the route extraction function 104 extracts optional two points and extracts a train route connecting the extracted points based on the signal route information (S203), the position definition point suggestion function 105 (position definition point work out unit) works out suggested information with the point on the extracted route being made a position of the new position definition point (S204), and the screen output function 107 (display unit) displays the suggested information on the screen (S206).

Further, it is also possible to be configured that the delay calculation function 103 (delay calculation unit) extracts a combination of the position definition points in which the delay time included in the delay information acquired from the timetable information is a constant value or more (S202), and the extracted points are made the optional two points. By extracting the position definition points thus, possibility of causing the delay can be lowered.

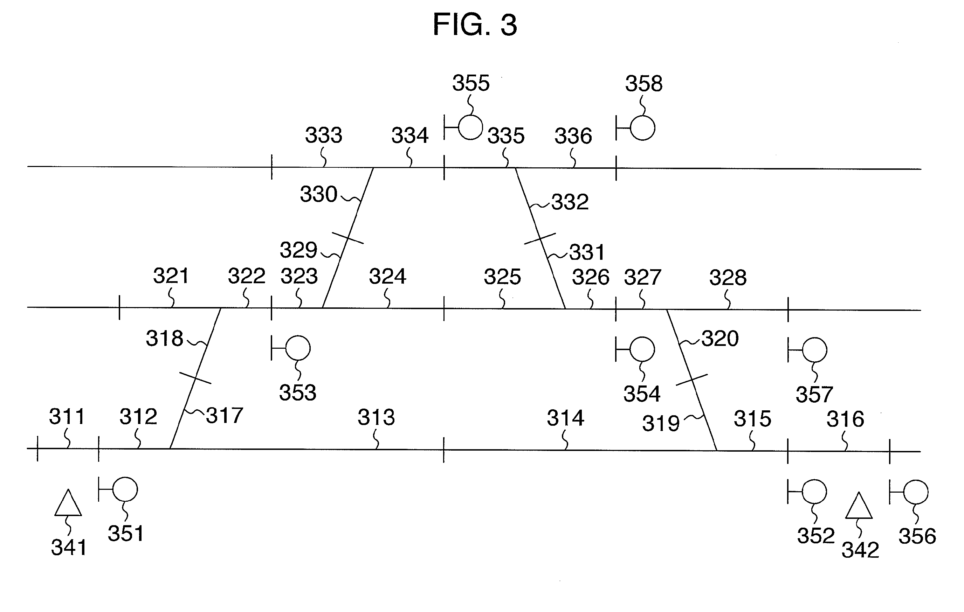

FIG. 3 is a drawing showing a line shape of a railroad.

This is a drawing showing a line shape used in Example 1.

311-336 show links. Here, the link is a unit obtained by dividing the railroad by the boundary or the branch position of the track circuit. 341-342 show the position definition points. 351-358 show the signals.

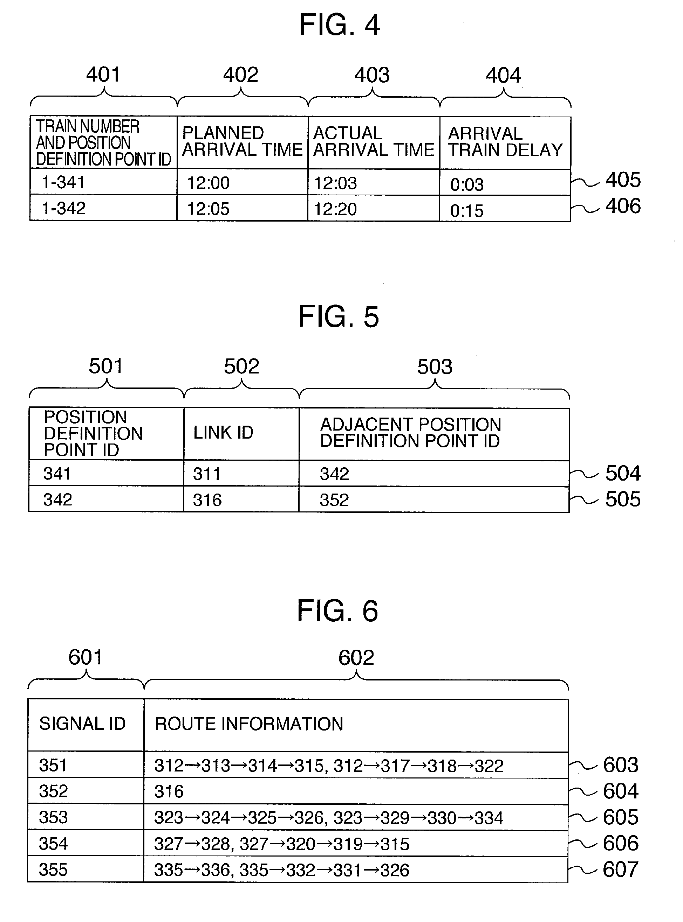

FIG. 4 is a drawing showing the delay information.

This drawing shows the delay information held by the timetable data suggestion device in an embodiment of the present invention.

"Train number and position definition point ID" 401 is a combination of a number given to a train in order to uniquely specify the train and a value showing the position definition point describable in the timetable, a row 405 is the description on one in which "train number" is "1" and "position definition point ID" is "341", and a row 406 is the description on one in which "train number" is "1" and "position definition point ID" is "342".

In "planned arrival time" 402, the arrival time of a train corresponding to the specified train number at the specified position definition point at the time of planning is described. For example, "planned arrival time" for one in which "train number and position definition point ID" is "1-341" is "12:00", and "planned arrival time" for one in which "train number and position definition point ID" is "1-342" is "12:05". In "actual arrival time" 403, the actual arrival time of a train corresponding to the specified train number at the specified position definition point is described. For example, "actual arrival time" for one in which "train number and position definition point ID" is "1-341" is "12:03", and "actual arrival time" for one in which "train number and position definition point ID" is "1-342" is "12:20". In "arrival train delay" 404, the difference of the actual arrival time and the planned arrival time is described. For example, "arrival train delay" for one in which "train number and position definition point ID" is "1-341" is "0:03", and "arrival train delay" for one in which "train number and position definition point ID" is "1-342" is "0:15". Although only the arrival time and the arrival train delay are described here, the departure time and the departure train delay may also be included.

FIG. 5 is a drawing showing the position definition point information. This drawing shows the position definition point information 111 held by the timetable data suggestion device 101 in an embodiment of the present invention.

"Position definition point ID" 501 is a value showing a position definition point describable by the timetable, a row 504 is a description on one in which "position definition point ID" is "341", and a row 505 is a description on one in which "position definition point ID" is "342".

In "link ID" 502, a link corresponding to the location of a position definition point is described. For example, "link ID" for one in which "position definition point ID" is "341" is "311", and "link ID" for one in which "position definition point ID" is "342" is "316". In "adjacent position definition point ID" 503, a position definition point that can be specified next to this position definition point in the timetable is described. For example, "adjacent position definition point ID" for one in which "position definition point ID" is "341" is "342", and "adjacent position definition point ID" for one in which "position definition point ID" is "342" is "352".

When routes that do not pass through a crossover from a position definition point to an adjacent position definition point exist, the timetable in which these are described is to show a route that does not pass through a crossover. For example, in the line shape of FIG. 3, when the array of the position definition point in the timetable is "341" "342", the route shown by it is "311" "312" "313" "314" "315" "316".

FIG. 6 is a drawing showing the signal route information. This drawing shows the signal route information held by the timetable data suggestion device 101 in an embodiment of the present invention.

"Signal ID" 601 is a value uniquely specifying a signal, a row 603 is a description on one in which "signal ID" is "351", a row 604 is a description on one in which "signal ID" is "352", a row 605 is a description on one in which "signal ID" is "353", a row 606 is a description on one in which "signal ID" is "354", and a row 607 is a description on one in which "signal ID" is "355".

In "route information" 602, information in which a collection of links included in the protection area of a signal is arrayed in the order of travel of the train is described. When plural collections of the links exist, the route information is described so as to be separated by ",". For example, "route information" for one in which "signal ID" is "351" is "312→313→314→315, 312→317→318→322", "route information" for one in which "signal ID" is "352" is "316", "route information" for one in which "signal ID" is "353" is "323→324→325→326, 323→329→330→334", "route information" for one in which "signal ID" is "354" is "327→328, 327→320→319→315", and "route information" for one in which "signal ID" is "355" is "335→336, 335→332→331→326".

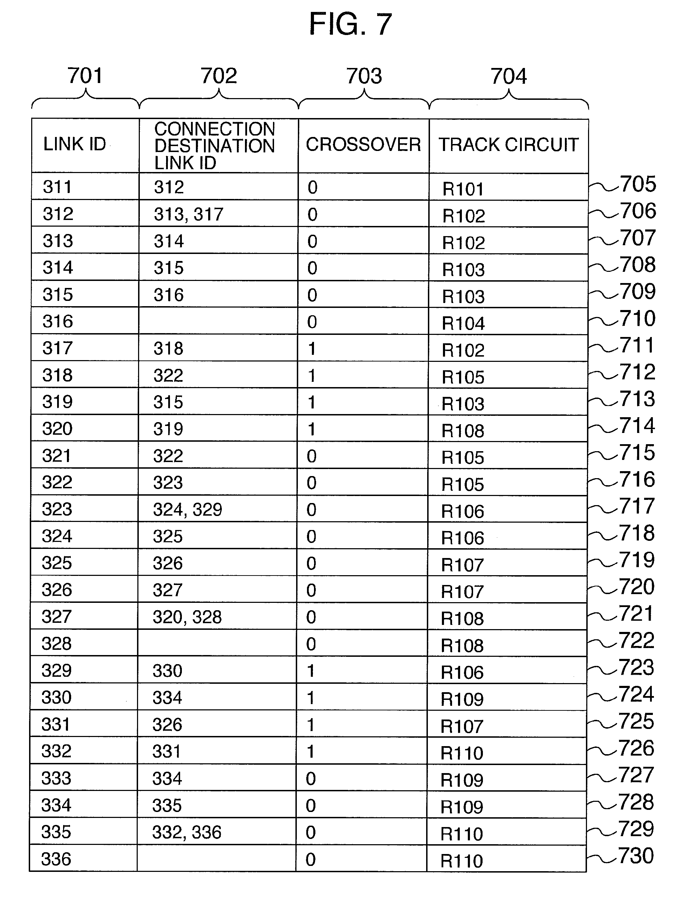

FIG. 7 is a drawing showing the link information. This drawing shows the link information held by the timetable data suggestion device 101 in an embodiment of the present invention.

"Link ID" 701 is a value uniquely specifying a link. In "connection destination link ID", a link (links) connected to this link is described. When plural connection destination links exist, the connection destination links are described so as to be separated by ",". For example, "connection destination link ID" for one in which "link ID" is "311" is "312", and "connection destination link ID" for one in which "link ID" is "312" is "313, 317". Similar descriptions are made thereafter.

In "crossover" 703, a value that shows whether a link is a crossover or not is described. "0" is described when a link is not a crossover, and "1" is described when a link is a crossover. For example, "crossover" for one in which "link ID" is "311" is "0", and "crossover" for one in which "link ID" is "312" is "0". Similar descriptions are made thereafter.

In "track circuit" 704, a track circuit corresponding to a link is described. For example, "track circuit" for one in which "link ID" is "311" is "R101", and "track circuit" for one in which "link ID" is "312" is "R102". Similar descriptions are made thereafter.

FIG. 8 is a drawing showing a program flow of the route extraction function 104 of the timetable data suggestion device 101.

The route extraction function 104 of the timetable data suggestion device 101 sets a link corresponding to a position definition point on the start point side onto a link list (S800).

The route extraction function 104 of the timetable data suggestion device 101 extracts each link list within the collection of the link list (S801). When there is an element, the process proceeds to step 802. The process ends after processing for each element.

The route extraction function 104 of the timetable data suggestion device 101 checks whether or not such signal exists that a link in the end of a link list is the first link in the route information (S802). When there exists such signal that a link in the end is the first link in the route information, the process proceeds to step 803. When such signal that a link in the end is the first link in the route information does not exist, the process proceeds to step 806.

The route extraction function 104 of the timetable data suggestion device 101 adds the signal route information to the end of the link list. Also, when plural pieces of the route information exist, the link list is copied, and the signal route information is added to the end of the link list (S803).

The route extraction function 104 of the timetable data suggestion device 101 checks whether or not a link in the end of the link list corresponds to a position definition point on the end point side (S804). When the link in the end corresponds to a position definition point on the end point side, the process proceeds to step 805. When the link in the end does not correspond to a position definition point on the end point side, the process proceeds to step 806.

The route extraction function 104 of the timetable data suggestion device 101 stores the link list as an extraction result (S805).

The route extraction function 104 of the timetable data suggestion device 101 checks whether the connection destination link of the link in the end of the link list exists (S806). When the connection destination link of the link in the end does not exist, the process returns to step 801. When the connection destination link of the link in the end exists, the process proceeds to step 807.

The route extraction function 104 of the timetable data suggestion device 101 adds the connection destination link of the link in the end of the link list to the end of the link list. Also, when plural connection destination links exist, the link list is copied and the connection destination link is added to the end of the link list (S807).

Here, an example of a case when the start point side of the position definition points on a route which is desired to be obtained is 341 and the end point side of the same is 342 in FIG. 3 will be shown.

The link list describes a link in a form separated by "," and surrounded by "[" and "]". Also, in the description of FIG. 8, "[under processing]" is described immediately after the link list with respect to a link list under processing, and "[stored]" is described immediately after the link list with respect to a link list stored.

Next, the processes of FIG. 8 will be described.

By setting a link corresponding to the position definition point on the start point side in the link list, the collection of the link list becomes as [311] (S800). Because such signal that the link 311 in the end of the link list is the first link in the route information does not exist, the process proceeds to step S806 next (S802). Because a connection destination link of the link 311 in the end of the link list exists, the process proceeds to step 807 next (S806). Because the connection destination link of the link 311 in the end of the link list is 312, the collection of the link list becomes as [311, 312] [under processing]. Next, the process proceeds to step 802 (S807). Because there exists such the signal 351 that the link 312 in the end of the link list is the first link in the route information, the process proceeds to step 803 next (S802). Because the route information of 351 is added to the end, the collection of the link list becomes as [311, 312, 313, 314, 315] [under processing], [311, 312, 317, 318, 322]. Next, the process proceeds to step 804 (S803). Because the link 315 in the end of the link list does not correspond to the position definition point on the end point side, the process proceeds to step 806 (S804). Because a connection destination link of the link 315 in the end of the link list exists, the process proceeds to step 807 (S806). Because the connection destination link of the link 315 in the end of the link list is 316, the collection of the link list becomes as [311, 312, 313, 314, 315, 316] [under processing], [311, 312, 317, 318, 322]. Next, the process proceeds to step 802 (S807). Because such the signal 352 that the link 316 in the end of the link list is the first link in the route information exists, the process proceeds to step 803 (S802). Because the route information of 352 is added to the end, the collection of the link list becomes as [311, 312, 313, 314, 315, 316] [under processing], [311, 312, 317, 318, 322]. Next, the process proceeds to step 804 (S803). Because the link 316 in the end of the link list corresponds to the position definition point on the end point side, the process proceeds to step 805 next (S804).

Because the link list under processing is stored, the collection of the link list becomes as [311, 312, 313, 314, 315, 316] [stored], [311, 312, 317, 318, 322]. Next, the process proceeds to step 801 (S805).

Because there is a link list not yet processed, the collection of the link list becomes as [311, 312, 313, 314, 315, 316] [stored], [311, 312, 317, 318, 322] [under processing], and the process proceeds to step 802 next (S801). Because such signal that the link 322 in the end of the link list is the first link in the route information does not exist, the process proceeds to step 806 next (S802). Because a connection destination link of the link 322 in the end of the link list exists, the process proceeds to step 807 next (S806). Next, because a connection destination link of the link 322 in the end of the link list is 323, the collection of the link list becomes as [311, 312, 313, 314, 315, 316] [stored], [311, 312, 317, 318, 322, 323] [under processing]. Next, the process proceeds to step 802 (S807). Because such signal that the link 323 in the end of the link list is the first link in the route information exists, the process proceeds to step 803 next (S802). Because the route information of the signal 353 is added to the end of the link list, the collection of the link list becomes as [311, 312, 313, 314, 315, 316] [stored], [311, 312, 317, 318, 322, 323, 324, 325, 326] [under processing], [311, 312, 317, 318, 322, 323, 329, 330, 334] (S803). Next, the process proceeds to step 804. Because the link 326 in the end of the link list does not correspond to the position definition point on the end point side, the process proceeds to step 806 next (S804). Because a connection destination link of the link 326 in the end of the link list exists, the process proceeds to step 807 next (S806). Because a connection destination link of the link 326 in the end of the link list is 327, the collection of the link list becomes as [311, 312, 313, 314, 315, 316] [stored], [311, 312, 317, 318, 322, 323, 324, 325, 326, 327] [under processing], [311, 312, 317, 318, 322, 323, 329, 330, 334]. Next, the process proceeds to step 802 (S807). Because such signal that the link 323 in the end of the link list is the first link in the route information exists, the process proceeds to step 803 next (S802). Because the route information of the signal 354 is added to the end of the link list, the collection of the link list becomes as [311, 312, 313, 314, 315, 316] [stored], [311, 312, 317, 318, 322, 323, 324, 325, 326, 327, 328] [under processing], [311, 312, 317, 318, 322, 323, 329, 330, 334], [311, 312, 317, 318, 322, 323, 324, 325, 326, 327, 320, 319, 315]. Next, the process proceeds to step 804 (S803). Next, because the link 328 in the end of the link list does not correspond to the position definition point on the end point side, the process proceeds to step 806 next (S804). Because a connection destination link of the link 328 in the end of the link list does not exist, the process proceeds to step 801 next (S806).

Thereafter, by similar processing, the collection of the link list changes as described below. Also, the changed portions are underlined.
·[311,312,313,314,315,316] [stored], [311, 312, 317, 318, 322, 323, 324, 325, 326, 327, 328], [311, 312, 317, 318, 322, 323, 329, 330, 334] [under processing], [311, 312, 317, 318, 322, 323, 324, 325, 326, 327, 320, 319, 315]
·[311, 312, 313, 314, 315, 316] [stored], [311, 312, 317, 318, 322, 323, 324, 325, 326, 327, 328], [311, 312, 317, 318, 322, 323, 329, 330, 334, 335] [under processing], [311, 312, 317, 318, 322, 323, 324, 325, 326, 327, 320, 319, 315]
·[311, 312, 313, 314, 315, 316] [stored], [311, 312, 317, 318, 322, 323, 324, 325, 326, 327, 328], [311, 312, 317, 318, 322, 323, 329, 330, 334, 335, 336] [under processing], [311, 312, 317, 318, 322, 323, 324, 325, 326, 327, 320, 319, 315], [311,312,317,318,322,323,329, 330,334,335,332,331,326]
·[311, 312, 313, 314, 315, 316] [stored], [311, 312, 317, 318, 322, 323, 324, 325, 326, 327, 328], [311, 312, 317, 318, 322, 323, 329, 330, 334, 335, 336], [311, 312, 317, 318, 322, 323, 324, 325, 326, 327, 320, 319, 315] [under processing], [311, 312, 317, 318, 322, 323, 329, 330, 334, 335, 332, 331, 326]
·[311, 312, 313, 314, 315, 316] [stored], [311, 312, 317, 318, 322, 323, 324, 325, 326, 327, 328], [311, 312, 317, 318, 322, 323, 329, 330, 334, 335, 336], [311, 312, 317, 318, 322, 323, 324, 325, 326, 327, 320, 319, 315, 316] [under processing], [311, 312, 317, 318, 322, 323, 329, 330, 334, 335, 332, 331, 326]
·[311,312, 313, 314, 315, 316] [stored], [311, 312,317,318, 322, 323, 324, 325, 326, 327, 328], [311, 312, 317, 318, 322, 323, 329, 330, 334, 335, 336], [311, 312, 317, 318, 322, 323, 324, 325, 326, 327, 320, 319, 315, 316] [stored], [311, 312, 317, 318, 322, 323, 329, 330, 334, 335, 332, 331, 326] [under processing]
·[311, 312, 313, 314, 315, 316] [stored], [311, 312, 317, 318, 322, 323, 324, 325, 326, 327, 328], [311, 312, 317, 318, 322, 323, 329, 330, 334, 335, 336], [311, 312, 317, 318, 322, 323, 324, 325, 326, 327, 320, 319, 315, 316] [stored], [311, 312, 317, 318, 322, 323, 329, 330, 334, 335, 332, 331, 326, 327] [under processing]
·[311, 312, 313, 314, 315, 316] [stored], [311, 312, 317, 318, 322, 323, 324, 325, 326, 327, 328], [311, 312, 317, 318, 322, 323, 329, 330, 334, 335, 336], [311, 312, 317, 318, 322, 323, 324, 325, 326, 327, 320, 319, 315, 316] [stored], [311, 312, 317, 318, 322, 323, 329, 330, 334, 335, 332, 331, 326, 327, 328] [under processing], [311, 312, 317, 318, 322, 323, 329, 330, 334, 335, 332, 331, 326, 327, 320, 319, 315]
·[311, 312, 313, 314, 315, 316] [stored], [311, 312, 317, 318, 322, 323, 324, 325, 326, 327, 328], [311, 312, 317, 318, 322, 323, 329, 330, 334, 335, 336], [311, 312, 317, 318, 322, 323, 324, 325, 326, 327, 320, 319, 315, 316] [stored], [311, 312, 317, 318, 322, 323, 329, 330, 334, 335, 332, 331, 326, 327, 328], [311, 312, 17, 318, 322, 323, 329, 330, 334, 335, 332, 331, 326, 327, 320, 319, 315] [under processing]
·[311, 312, 313, 314, 315, 316] [stored], [311, 312, 317, 318, 322, 323, 324, 325, 326, 327, 328], [311, 312, 317, 318, 322, 323, 329, 330, 334, 335, 336], [311, 312, 317, 318, 322, 323, 324, 325, 326, 327, 320, 319, 315, 316] [stored], [311, 312, 317, 318, 322, 323, 329, 330, 334, 335, 332, 331, 326, 327, 328], [311, 312, 317, 318, 322, 323, 329, 30, 334, 335, 332, 331, 326, 327, 320, 319, 315, 316] [under processing]
·[311, 312, 313, 314, 315, 316] [stored], [311, 312, 317, 318, 322, 323, 324, 325, 326, 327, 328], [311, 312, 317, 318, 322, 323, 329, 330, 334, 335, 336], [311, 312, 317, 318, 322, 323, 324, 325, 326, 327, 320, 319, 315, 316] [stored], [311, 312, 317, 318, 322, 323, 329, 330, 334, 335, 332, 331, 326, 327, 328], [311, 312, 317, 318, 322, 323, 329, 330, 334, 335, 332, 331, 326, 327, 320, 319, 315, 316] [stored]

As a result, the collections of the link list stored are following 3 sets.
·[311,312,313,314,315,316]
·[311, 312, 317, 318, 322, 323, 324, 325, 326, 327, 320, 319, 315, 316]
·[311, 312, 317, 318, 322, 323, 329, 330, 334, 335, 332, 331, 326, 327, 320, 319, 315, 316]

Here, the routes that could not be expressed by the timetable until now are the second one and the third one, and the links in approach of the signal included in each route are:
·311, 322, 326, 315, 316
·311, 322, 334, 326, 315, 316

Also, because the links in approach of the signal existing in the routes that could be expressed by the timetable until now are 311, 315, 316, the positions of the position definition points suggested from the extracted second and third routes respectively become:
·322, 326
·322, 334, 326

From the above, followings are made the suggested objects.
·322, 326, 334

The delay of the train when the position definition points exist in them is calculated by a simulation, and the locations of new position definition points, the delay of the train obtained by the simulation, and the travel routes having been newly allowed to be expressed are displayed on a display and are produced to users.

The embodiments of the present invention were described above according to drawings. However, it is obvious that the present invention is not limited to the items shown in the embodiments described above, and change, improvement and the like thereof are possible based on descriptions of the claims. For example, although the data to be used are acquired from the timetable management device or held by the timetable data suggestion device itself in the embodiments described above, it is also possible that all data are acquired from other devices. Further, although the suggested position definition points and the result of the simulation are displayed on a display connected to the timetable data suggestion device, they may be transmitted to other devices. In addition, although new position definition points are to be suggested, it is also possible to suggest a route capable of being expressed when new position definition point exists.

### EXAMPLE 2

In the second example of the present invention, actions of the time the suggested position definition point is selected according to the number of the routes from a link on an extracted route to another position definition point will be described.

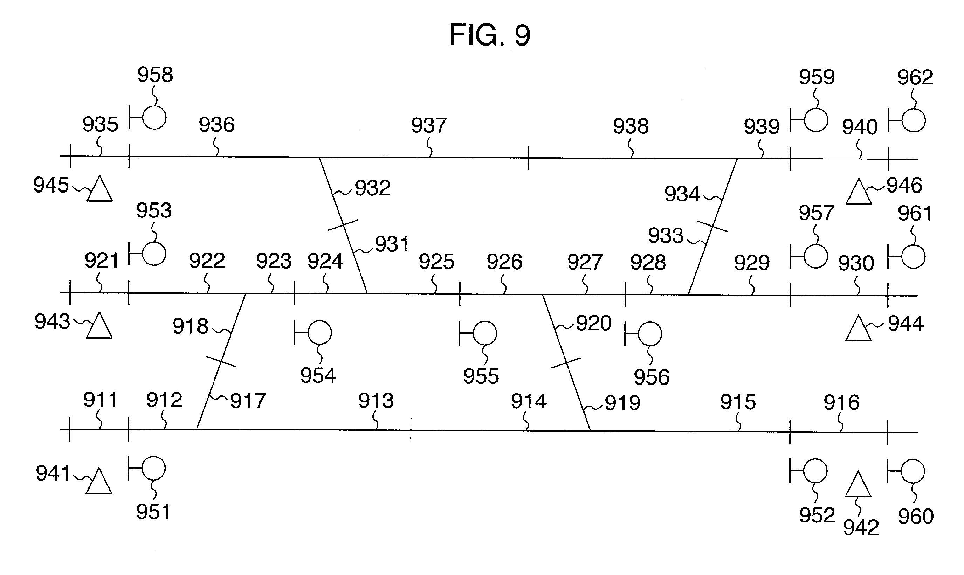

FIG. 9 is a drawing showing a line shape.

This is a drawing showing a line shape used in Example 2.

911-940 show links. 941-946 show position definition points. 951-962 show signals.

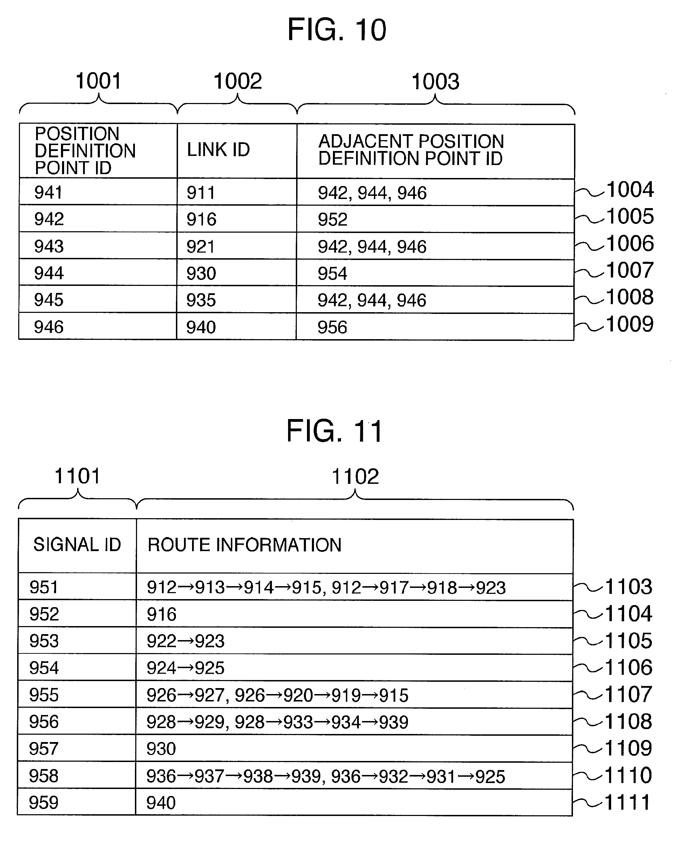

FIG. 10 is a drawing showing the position definition point information. This drawing shows the position definition point information held by the timetable data suggestion device in an embodiment of the present invention.

A row 1004 is a description on one in which "position definition point ID" is "941", a row 1005 is a description on one in which "position definition point ID" is "942", a row 1006 is a description on one in which "position definition point ID" is "943", a row 1007 is a description on one in which "position definition point ID" is "944", a row 1008 is a description on one in which "position definition point ID" is "945", and a row 1009 is a description on one in which "position definition point ID" is "946".

In "link ID" 1002, a link corresponding to the location of a position definition point is described. For example, "link ID" for one in which "position definition point ID" is "941" is "911", "link ID" for one in which "position definition point ID" is "942" is "916", "link ID" for one in which "position definition point ID" is "943" is "921", "link ID" for one in which "position definition point ID" is "944" is "930", "link ID" for one in which "position definition point ID" is "945" is "935", and "link ID" for one in which "position definition point ID" is "946" is "940". In "adjacent position definition point ID" 1003, a position definition point that can be specified next to this position definition point in the timetable is described. For example, "adjacent position definition point ID" for one in which "position definition point ID" is "941" is "942, 944, 946", "adjacent position definition point ID" for one in which "position definition point ID" is "942" is "952", "adjacent position definition point ID" for one in which "position definition point ID" is "943" is "942, 944, 946", "adjacent position definition point ID" for one in which "position definition point ID" is "944" is "954", "adjacent position definition point ID" for one in which "position definition point ID" is "945" is "942, 944, 946", and "adjacent position definition point ID" for one in which "position definition point ID" is "946" is "956".

FIG. 11 is a drawing showing the signal route information.

This drawing shows the signal route information held by the timetable data suggestion device in an embodiment of the present invention.

A row 1103 is a description on one in which "signal ID" is "951", a row 1104 is a description on one in which "signal ID" is "952", a row 1105 is a description on one in which "signal ID" is "953", a row 1106 is a description on one in which "signal ID" is "954", a row 1107 is a description on one in which "signal ID" is "955", a row 1108 is a description on one in which "signal ID" is "956", a row 1109 is a description on one in which "signal ID" is "957", a row 1110 is a description on one in which "signal ID" is "958", and a row 1111 is a description on one in which "signal ID" is "959".

In "route information" 1102, information in which a collection of links included in the protection area of a signal is arrayed in the order of travel of a train is described. When plural collections of links exist, the collections are described so as to be separated by ",". For example, "route information" for one in which "signal ID" is "951" is "912→913→914→915, 912→917→918→923", "route information" for one in which "signal ID" is "952" is "916", "route information" for one in which "signal ID" is "953" is "922→923", "route information" for one in which "signal ID" is "954" is "924→925", "route information" for one in which "signal ID" is "955" is "926→927, 926→920→919→915", "route information" for one in which "signal ID" is "956" is "928→929, 928→933→934→939", "route information" for one in which "signal ID" is "957" is "930", "route information" for one in which "signal ID" is "958" is "936→937→938→939, 936→932→931→925", and "route information" for one in which "signal ID" is "959" is "940".

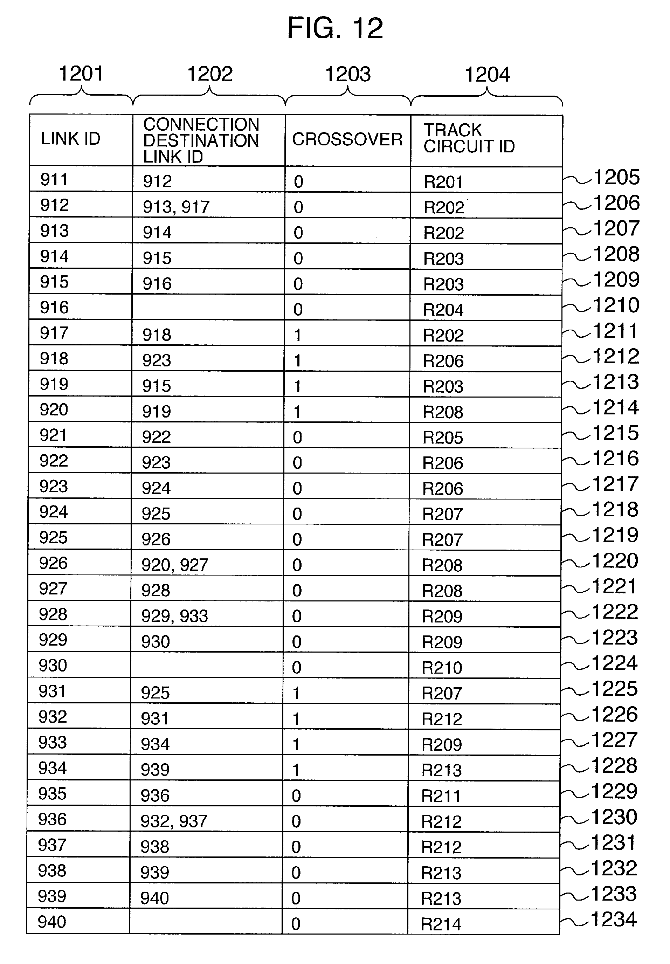

FIG. 12 is a drawing showing the link information.

This drawing shows the link information held by the timetable data suggestion device in an embodiment of the present invention.

A row 1205 is a description on one in which "link ID" is "911", a row 1206 is a description on one in which "link ID" is "912", and similar descriptions are made thereafter. In "connection destination link ID" 1202, a link connected to this link is described. For example, "connection destination link ID" for one in which "link ID" is "911" is "912", and "connection destination link ID" for one in which "link ID" is "912" is "913, 917". Similar descriptions are made thereafter.

In "crossover" 1203, a value showing whether a link is a crossover or not is described. "0" is described when the link is not a crossover, and "1" is described when the link is a crossover. For example, "crossover" for one in which "link ID" is "911" is "0", and "crossover" for one in which "link ID" is "912" is "0". Similar descriptions are made thereafter.

In "track circuit ID" 1204, a track circuit corresponding to a link is described. For example, "track circuit ID" for one in which "link ID" is "911" is "R201", and "track circuit ID" for one in which "link ID" is "912" is "R202". Similar descriptions are made thereafter.

Here, an example of a case the start point side of a position definition point on a route which is desired to be obtained is 941 and the end point side of the same is 942 in FIG. 9 will be shown.

By executing the processes shown in FIG. 8, following link lists are stored.
·[911,912,913,914,915,916]
·[911, 912, 917, 918, 923, 924, 925, 926, 920, 919, 915, 916]

Here, a route that could not be expressed by the timetable until now is the second one, and the links in approach of the signal included in the route are:
·911, 923, 925, 915, 916

Also, because the links in approach of a signal existing in a route that could be expressed by the timetable until now are 911, 915, 916, the positions of the position definition points suggested from the extracted route become:
·923, 925

With respect to these links, by the processes similar to those of FIG. 8, the position definition point that can be reached from the link and the position definition point that can reach the link are extracted. In extracting the position definition point that can reach the link, the connection destination link ID is not tracked from the link ID in FIG. 7, but the link ID is tracked from the connection destination link ID to the contrary.

From the above, the position definition points that can be reached from the link and the position definition points that can reach the link for each link become:
·923 : 941,942,943,944,946
·925 : 941, 942, 943, 944, 945, 946

Here, because the number of pieces of the position definition points to which 925 corresponds is greater compared to 923, 925 is made the suggested object.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A timetable data suggesting device, comprising:
a storage unit that stores position definition point information (111) including position information of position definition points that are points on a train route, signal route information (112) that defines a train route that is a protection area of a signal, and link information (113) that defines the railroad shape;
a route extraction unit that extracts optional two points and extracts a train route that connects the extracted points based on the signal route information;
a position definition point work out unit that works out suggested information with the points on the extracted route being made positions of new position definition points using the link information; and
a display unit that displays the suggested information on a screen.

2. The timetable data suggesting device according to claim 1,
wherein the storage unit acquires timetable information of a train and further stores delay information including delay time of the train at position definition points, and
wherein a delay calculation unit extracts a combination of position definition points of which delay time included in the delay information calculated from the timetable information is a constant value or more, and defines the extracted points as the optional two points.

3. The timetable data suggesting device according to claim 1,
wherein the position definition point work out unit calculates delay time of a case the new position definition points are added, and works out suggested information combining the position definition points and the calculated delay time.

4. The timetable data suggesting device according to claim 1,
wherein the position definition point work out unit calculates routes that newly become capable of being expressed by a timetable when the new position definition points are added, and works out suggested information combining the new position definition points and the routes.

5. The timetable data suggesting device according to claim 1,
wherein the position definition point work out unit calculates a route in which the number of times of crossing over between railroads on a route that connects the extracted position definition points is less as a new position definition point.

6. The timetable data suggesting device according to claim 1,
wherein the position definition point work out unit calculates the number of position definition points that can be reached from a position in approach of signals on the extracted route other than the extracted position definition points and the number of position definition points that cat reach a position in approach of signals on the extracted route other than the extracted position definition points for every position in approach of a signal that does not exist on a route connecting the position definition points that can be expressed in the timetable among positions in approach of signals existing on the extracted route, and works out suggested information with a position in approach of the signal of which the number of the calculated position definition points is greater being made a position of new position definition point.

7. The timetable data suggesting device according to claim 1,
wherein delay information (110), the position definition point information (111), and the signal route information (112) stored in the storage unit are acquired from other devices.

8. The timetable data suggesting device according to claim 1,
wherein the suggested information is delivered to other devices.
